# EUROPEAN PATENT SPECIFICATION

(11) **EP 2 381 589 B1**
(45) Date of publication and mention of the grant of the patent: **05.10.2016**
(21) Application number: 09839519.7
(22) Date of filing: 13.02.2009
(51) Int. Cl.: H04B 7/216, H04L 27/34, H04L 1/08, H04L 27/36, H04L 1/00

(54) **MODULATING AND MAPPING METHOD AND DEVICE FOR DTX BITS**
MODULATIONS- UND ZUORDNUNGSVERFAHREN SOWIE VORRICHTUNG FÜR DTX-BITS
PROCÉDÉ ET DISPOSITIF DE MODULATION ET DE MAPPAGE POUR LES BITS DTX

(30) Priority: 09.02.2009 WO PCT/CN2009/070383
(43) Date of publication of application: 26.10.2011
(73) Proprietor: Huawei Technologies Co., Ltd., Longgang District Shenzhen, Guangdong 518129 (CN)
(72) Inventor: YANG, Bo c/o Huawei Technologies Co.Ltd., Int.Prop.Dept., Shenzhen (CN); HE, Chuanfeng c/o Huawei Technologies Co.Ltd., Int.Prop.Dept., Shenzhen (CN); LI, Jing c/o Huawei Technologies Co.Ltd., Int.Prop.Dept., Shenzhen (CN); WANG, Weixin c/o Huawei Technologies Co.Ltd., Int.Prop.Dept., Shenzhen (CN)
(74) Representative: Kreuz, Georg Maria
(86) International application number: PCT/CN2009/070431
(87) International publication number: WO 2010/088802

(56) References cited:
- CN-A- 1 829 116
- CN-A- 101 090 359
- CN-C- 1 118 975
- US-A1- 2003 112 888
- IPWIRELESS: "Correction to DTX bit insertion for MBSFN 16-QAM", 3GPP DRAFT; 25.213_CR0101(CAT-A,REL-8)_16QAM_DTX, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Athens, Greece; 20090204, 4 February 2009 (2009-02-04), XP050318440, [retrieved on 2009-02-04]

## Description

### FIELD OF THE INVENTION

The present invention relates to the field of communications technologies, and in particular, to a mapping method and device for Discontinuous Transmission (DTX) bits.

### BACKGROUND OF THE INVENTION

In a radio communications system, in coding and multiplexing of a Forward Access Channel (FACH), DTX bits are inserted to fill up a radio frame, to adapt for the length change of each frame data in each transmission channel at different service rates, in which the DTX bits are used to indicate a turn-off time of a transmitter. According to the position of each transmission channel in a Coded Composite Transport Channel (CCTrCH), the insertion of the DTX bits may be implemented in two manners, that is, inserting the DTX bits at a flexible position and inserting the DTX bits at a fixed position. The inserting the DTX bits at a flexible position indicates that a certain number of DTX bits are inserted at a frame trailer after each transmission channel is multiplexed; and the inserting the DTX bits at a fixed position indicates that a certain number of DTX bits are added to the end of Time Transmission Interval (TTI) data for each transmission channel, to ensure that the position of each transmission channel remains unchanged in the CCTrCH.

In transmission in a FACH bearing MBMS over a Single Frequency Network (MBSFN), a mapped downlink physical channel is a Secondary Common Control Physical Channel (S-CCPCH), and the S-CCpCH may be modulated using 16 Quadrature Amplitude Modulation (QAM). In a 16QAM modulation mapping process, an element input by a FACH at each time is a set of four consecutive binary symbols, which are split into symbols on two branches (the I branch and Q branch), two symbols being on each branch. Symbols on each branch are mapped after modulation to form real-value symbols on the I branch and Q branch. A modulation mapping process in the prior art is described with four consecutive symbols including DTX bits as an example. It is assumed that the four consecutive binary symbols are nₖ, nₖ₊₁, nₖ₊₂, and nₖ₊₃, in which the number of the DTX bits is N_{DTX(k)}. When 0≤N_{DTX(k)}≤3, the symbol values of the DTX bits are replaced with the binary symbol "1", for example, if the four symbols are "0, DTX, 1, and DTX", after the symbol values of the DTX bits are replaced with 1, the corresponding four binary symbols turn to "0, 1, 1, and 1"; while when N_{DTX(k)} = 4, after the modulation mapping, the output on the I branch and Q branch is equal to a real value 0, and in this case, the transmission channels of I branch and Q branch are closed down.

However, in the prior art in the existing 16QAM modulation mapping process, when the consecutive binary symbols in an element are not all DTX bits, the symbol values of the DTX bits are all replaced with "1 ", regardless of the symbol values of the other non-DTX bits. The receiving performance of the non-DTX bits is hard to be improved with such a simple value setting method. In addition, only when all the binary symbols in an element are DTX bits, the transmission channels of the I branch and Q branch can be closed down, and thus when only the input symbols on a branch are all DTX bits, transmission power is consumed, and system resources are wasted.

The document IPWireless: "Correction to DTX bit insertion for MBSFN 16-QAM", 3GPP DRAFT; 25.213_CR (CAT-A, REL-8) 16QAM DTX, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, no. Athens, Greece; 20090204, 4 February 2009 (2009-02-04) describes a method of DTX bit insertion for MBSFN 16-QAM. In the case of 16-QAM on S-CCPCH, a sequence of four consecutive symbols *nₖ, nₖ₊₁, nₖ₊₂, nₖ₊₃* (with *k* mod 4 = 0) at the input to the modulation mapper may contain values from the set 0, 1, and "DTX". The number of "DTX" symbols in the input sequence *nₖ, nₖ₊₁, nₖ₊₂, nₖ₊₃* is denoted as *N_{DTX,}(k).* In the case that 0 ≤ *N_{DTX}(k)* ≤ 3 , the binary symbol "1" is assigned in lieu of any input symbols with value "DTX" before the serial to parallel conversion stage, and modulation mapping is then performed according to table 3B. In the case that *N_{DTX}(k)* = 4, the output from the modulation mapping on both the I and Q branches is equal to the real value 0.

Document US2003/0112888 A1 discloses a multilevel modulating method characterized by replacing DTX bits (also called dummy bits) by "0" or "1" in such a way that the power of the transmitted signal is reduced.

### SUMMARY OF THE INVENTION

The present invention provides a mapping method and device for DTX bits, to solve the problem that the existing value setting method of DTX bits is too simple, and thus the receiving performance of non-DTX bits cannot be improved.

To solve the above technical problem, the present invention provides the following technical solutions.

According to the first aspect of the present invention a modulation mapping method for DTX bits includes:
receiving binary symbols from a downlink physical channel;
replacing symbol values of DTX bits in the binary symbols with symbol values of non-DTX bits, to obtain updated binary symbols; and
performing modulation mapping on the updated binary symbols.

According to the second aspect of the present invention a modulation mapping device for DTX bits includes:
a receiving unit, configured to receive binary symbols from a downlink physical channel;
an operation unit, configured to replace symbol values of DTX bits in the binary symbols with symbol values of non-DTX bits, to obtain updated binary symbols; and
a mapping unit, configured to perform modulation mapping on the updated binary symbols.

According to the technical solutions provided in the present invention, when the binary symbols from the downlink physical channel are received, the symbol values of the DTX bits in the binary symbols are replaced with the symbol values of the non-DTX bits, to obtain the updated binary symbols, and modulation mapping is performed on the updated binary symbols. Using the DTX bits to replicate the non-DTX bits, the DTX bits are supplied to a receiving end as redundant information of the non-DTX bits, such that the performance for demodulating the non-DTX bits by the receiving end is improved. In addition, after the binary symbols from the downlink physical channel are received, when the binary symbols on one branch are all DTX bits, modulation mapping is performed on the binary symbols on the same branch, and the real value 0 is output. Therefore, it can be known that when only the input symbols on only one branch are all DTX bits, the transmission channel for the branch may be closed down alone, and thus the system transmission power is lowered and the system resources are saved correspondingly.

### BRIEF DESCRIPTION OF THE DRAWINGS

FIG. 1 is a flow chart of a first embodiment of a mapping method for DTX bits according to the present invention;
FIG. 2 is a flow chart of a second embodiment of a mapping method for DTX bits according to the present invention;
FIG. 3 is a flow chart of a third embodiment of a mapping method for DTX bits according to the present invention;
FIG. 4 is a flow chart of a fourth embodiment of a mapping method for DTX bits according to the present invention;
FIG. 5 is a flow chart of a fifth embodiment of a mapping method for DTX bits according to the present invention;
FIG. 6 is a flow chart of a sixth embodiment of a mapping method for DTX bits according to the present invention;
FIG. 7 is a schematic structural view of a device employing an embodiment of a mapping method for DTX bits according to the present invention;
FIG. 8 is a block diagram of a first embodiment of a mapping device for DTX bits according to the present invention;
FIG. 9 is a block diagram of a second embodiment of a mapping device for DTX bits according to the present invention; and
FIG. 10 is a block diagram of a third embodiment of a mapping device for DEX bits according to the present invention.

### DETAILED DESCRIPTION OF THE EMBODIMENTS

The present invention provides a mapping method and device for DTX bits.

To make the present invention clearer to persons skilled in the art, and make the above objectives, features, and advantages of the present invention more comprehensible, the present invention is described in detail below with reference to the accompanying drawings and specific embodiments.

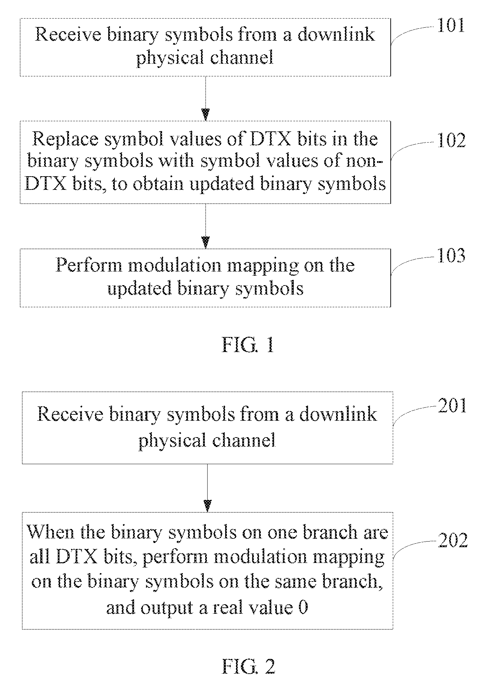

FIG. 1 is a flow chart of a first embodiment of a mapping method for DTX bits according to the present invention. As shown in FIG. 1, the method includes the following steps:
Step 101: Receive binary symbols from a downlink physical channel.
Step 102: Replace symbol values of DTX bits in the binary symbols with symbol values of non-DTX bits, to obtain updated binary symbols.
   The following manner may be adopted, in which the symbol values of the DTX bits in the binary symbols are replaced with symbol values of adjacent non-DTX bits; the symbol values of the DTX bits in the binary symbols are replaced with symbol values of non-DTX bits having the lowest reliability, based on the reliability of each bit in the binary symbols; the symbol values of the DTX bits in the binary symbols are replaced with symbol values of non-DTX bits on the same branch as the DTX bits; or the symbol values of the DTX bits in the binary symbols on the same branch are replaced with symbol values of non-DTX bits on the other branch.
Step 103: Perform modulation mapping on the updated binary symbols.

The modulation mapping may be 16QAM modulation mapping, 64QAM modulation mapping, or a higher order modulation mapping.

According to the embodiment, using the DTX bits to replicate the non-DTX bits, the DTX bits are supplied to a receiving end as redundant information of the non-DTX bits, such that the performance for demodulating the non-DTX bits by the receiving end is improved.

FIG. 2 is a flow chart of a second embodiment of a mapping method for DTX bits according to the present invention. As shown in FIG. 1, the method includes the following steps:
Step 201: Receive binary symbols from a downlink physical channel.
Step 202: when the binary symbols on one branch are all DTX bits, perform modulation mapping on the binary symbols on the same branch, and output a real value 0.

The modulation mapping may be 16QAM modulation mapping, 64QAM modulation mapping, or a higher order modulation mapping.

In addition, when the binary symbols on one branch include non-DTX bits, symbol values of the DTX bits in the binary symbols are replaced with symbol values of the non-DTX bits on the same branch, to obtain updated binary symbols; symbol values of the DTX bits in the binary symbols on the same branch are replaced with 0 or 1, to obtain updated binary symbols; symbol values of the DTX bits in the binary symbols on the same branch are replaced with symbol values of adjacent non-DTX bits, to obtain updated binary symbols; symbol values of the DTX bits in the binary symbols on the same branch are replaced with symbol values of non-DTX bits having the lowest reliability, based on the reliability of each bit in the binary symbols, to obtain updated binary symbols; or, symbol values of the DTX bits in the binary symbols on the same branch are replaced with symbol values of non-DTX bits in the binary symbols on the other branch, to obtain updated binary symbols. Then, modulation mapping is performed on the updated binary symbols.

According to the above embodiment, when the binary symbols on one branch are all DTX bits, modulation mapping is performed on the binary symbols on the same branch, and then a real value 0 is output, so that transmission channel for the branch may be closed down alone and thus the system transmission power is lowered correspondingly.

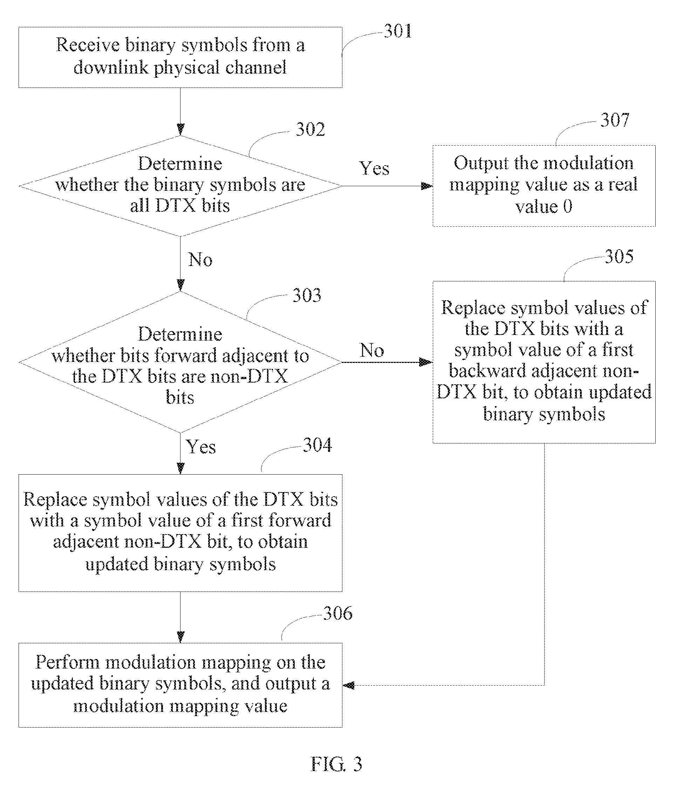

FIG. 3 is a flow chart of a third embodiment of a mapping method for DTX bits according to the present invention. In this embodiment, a modulation mapping process after symbol values of DTX bits are replaced with symbol values of non-DTX bits is exemplified.
Step 301: Receive binary symbols from a downlink physical channel.
Step 302: Determine whether the binary symbols are all DTX bits. If yes, step 307 is performed; otherwise, step 303 is performed.
Step 303: Determine whether bits forward adjacent to the DTX bits are non-DTX bits. If yes, step 304 is performed; otherwise, step 305 is performed.
Step 304: Replace symbol values of the DTX bits with a symbol value of a first forward adjacent non-DTX bit, to obtain updated binary symbols, and Step 306 is performed.
Step 305: Replace symbol values of the DTX bits with a symbol value of a first backward adjacent non-DTX bit, to obtain updated binary symbols.
Step 306: Perform modulation mapping on the updated binary symbols, output a modulation mapping value. The current process ends.
Step 307: Output the modulation mapping value as a real value 0. The current process ends.

It should be noted that a manner used in Steps 303 to 305 in the above embodiment includes: determining whether the bits forward adjacent to the DTX bits are non-DTX bits, in which if yes, the symbol values of the forward adjacent non-DTX bits are taken, and if not, the symbol value of the first backward adjacent non-DTX bit is taken.

In other embodiments of the present invention, the following manner may be adopted, in which it is determined whether the bits backward adjacent to the DTX bits are non-DTX bits first, if yes, the symbol values of the backward adjacent non-DTX bits are taken, and if not, the symbol value of the first forward adjacent non-DTX bit is taken.

Hereinafter, the modulation mapping processes in the above three embodiments are described with 16QAM as an example. It is assumed that four consecutive binary symbols are nₖ, nₖ₊₁, nₖ₊₂, and nₖ₊₃, and if a number of DTX bits is smaller than 4, the symbol values of the DTX bits are replaced with a symbol value of a first forward adjacent non-DTX bit. For example, if the four binary symbols are respectively "1, DTX, 0, and DTX", the values of the binary symbols after replacing the symbol values of the DTX bits are "1, 1, 0, 0"; and if the forward adjacent non-DTX bits do not exist, a symbol value of a first backward adjacent non-DTX bit is taken, for example, the four binary symbols are respectively "DTX, 1, DEX, 0", and the values of the binary symbols after replacing the symbol values of the DTX are "1, 1, 1, 0". The modulation mapping is performed on the updated binary symbols, that is, an existing 16QAM modulation mapping table is queried to obtain the real values of the two branches after modulation mapping. In addition, if the number of the DTX bits in n_{k,} nₖ₊₁, nₖ₊₂, nₖ₊₃ is equal to 4, the output from the modulation mapping on the two branches is equal to the real value 0.

According to the embodiment, using the DTX bits to replicate the non-DTX bits, the DTX bits are supplied to a receiving end as redundant information of the non-DTX bits, such that the performance for demodulating the non-DTX bits by the receiving end is improved.

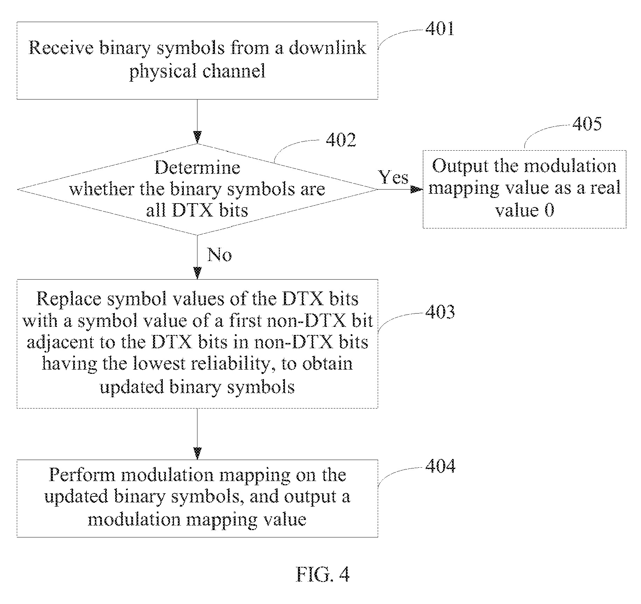

FIG. 4 is a flow chart of a fourth embodiment of a mapping method for DTX bits according to the present invention. In this embodiment, another modulation mapping process after symbol values of DTX bits are replaced with symbol values ofnon-DTX bits is exemplified.
Step 401: Receive binary symbols from a downlink physical channel.
Step 402: Determine whether the binary symbols are all DTX bits. If yes, step 406 is performed; otherwise, step 403 is performed.
Step 403: Replace symbol values of the DTX bits with a symbol value of a first adjacent non-DTX bit in non-DTX bits having the lowest reliability, to obtain updated binary symbols.
   In QAM-based modulation, mapping is generally performed by using a constellation diagram. With 16QAM as an example, the constellation diagram is divided into 4 quadrants, each quadrant includes 4 constellation points, and altogether 16 constellation points are included. According to the mapping of the constellation diagram, the values of the first two binary symbols in four received consecutive binary symbols determine the quadrant where the mapped constellation point is located, and the values of the rest two binary symbols determine the specific mapped constellation point in the quadrant. After the binary symbols mapped to the constellation point are modulated and wirelessly transmitted, the constellation point may be changed due to fading and interference of the radio channel. However, the probability of change of the quadrant where the constellation point is located is smaller than that of a specific constellation point in a certain quadrant, and thus the reliability of the last two binary symbols is lower than that of the first two binary symbols, so that symbol values of the DTX bits are generally replaced with a symbol value of a first non-DTX bit adjacent to the DTX bits in the non-DTX bits of the last two symbols (having the lowest reliability).
Step 404: Perform modulation mapping on the updated binary symbols, output a modulation mapping value. The current process ends.
Step 405: Output the modulation mapping value as a real value 0. The current process ends.

Hereinafter, the modulation mapping process of the fourth embodiment is still described with 16QAM as an example. It is assumed that four consecutive binary symbols are nₖ, nₖ₊₁, nₖ₊₂, and nₖ₊₃, in which the reliability of nₖ and nₖ₊₁ is higher than that of nₖ₊₂ and nₖ₊₃. If a number of the DTX bits is smaller than 4, the symbol values of the DTX bits are replaced with a symbol value of a first adjacent non-DTX bit in nₖ₊₂ and nₖ₊₃. For example, the four binary symbols are respectively "1, DTX, 0, 1", and the values of the binary symbols after replacing the symbol values of the DTX bits are "1, 0, 0, 1"; if non-DTX bits do not exist in nₖ₊₂ and nₖ₊₃, the symbol values of the DTX bits are replaced with a symbol value of a first adjacent non-DTX bit in nₖ and nₖ₊ᵢ. In addition, if the number of the DTX bits in nₖ, nₖ₊₁, nₖ₊₂, nₖ₊₃ is equal to 4, the output from the modulation mapping on the two branches is equal to the real value 0.

According to the embodiment, using the DTX bits to replicate the non-DTX bits, the DTX bits are supplied to a receiving end as redundant information of the non-DTX bits, so that the performance for demodulating the non-DTX bits by the receiving end is improved.

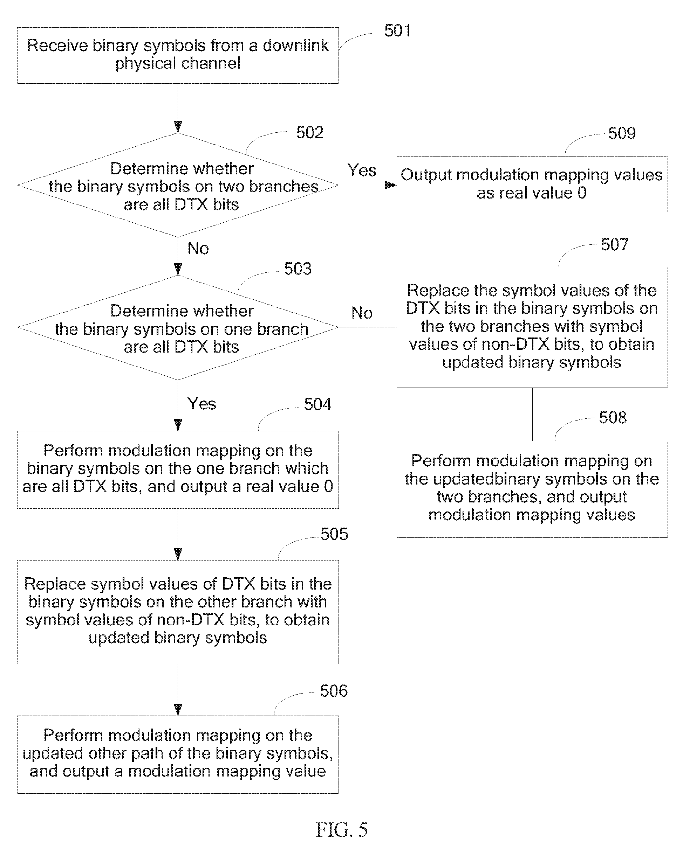

FIG. 5 is a flow chart of a fifth embodiment of a mapping method for DTX bits according to the present invention. In this embodiment, a modulation mapping process for binary symbols that are all DTX bits is exemplified.
Step 501: Receive binary symbols from a downlink physical channel.
Step 502: Determine whether the binary symbols on the two branches are all DTX bits. If yes, step 509 is performed; otherwise, step 503 is performed.
Step 503: Determine whether the binary symbols on one branch are all DTX bits. If yes, step 504 is performed.; otherwise, step 507 is performed.
Step 504: Perform modulation mapping on the binary symbols on the one branch , and output a real value 0.
Step 505: Replace symbol values of DTX bits in the binary symbols on the other branch with symbol values of non-DTX bits on the one branch, to obtain updated binary symbols.
   In step 505, in addition to obtaining the updated binary symbols by using the above value setting method, the symbol values of the DTX bits in the binary symbols on the one branch are replaced with 0 or 1, to obtain the updated binary symbols; the symbol values of the DTX bits in the binary symbols on the one branch are replaced with symbol values of adjacent non-DTX bits, to obtain the updated binary symbols; or the symbol values of the DTX bits in the binary symbols on the one branch are replaced with a symbol value of a non-DTX bit having the lowest reliability, based on the reliability of each bit in the binary symbols, to obtain the updated binary symbols.
Step 506: Perform modulation mapping on the updated binary symbols on the other branch, and output a modulation mapping value. The current process ends.
Step 507: Replace the symbol values of the DTX bits in the binary symbols on the two branches with the symbol values of the non-DTX bits on the respective branches, to obtain updated binary symbols.
Step 508: Perform modulation mapping on the updated binary symbols on the two branches, and output modulation mapping values. The current process ends.
Step 509: Output modulation mapping values as real values 0. The current process ends.

Hereinafter, the modulation mapping process of the fifth embodiment is still described with 16QAM as an example. It is assumed that four consecutive binary symbols are nₖ, nₖ₊₁, nₖ₊₂, and nₖ₊₃, in which nₖ and nₖ₊₁ are input as binary symbols on one branch, and nₖ₊ⱼ and nₖ₊₃ are input as binary symbols on the other branch. If nₖ and nₖ₊₂ are all DTX bits, a real value 0 is output after modulation mapping is performed on the binary symbols on the one branch; likewise, if nₖ and nₖ₊₃ are all DTX bits, a real value 0 is also output after modulation mapping is performed on the binary symbols on the one branch, that is, when the binary symbols on only one branch are all DTX bits, the transmission channel for the branch may be closed down. As for the binary symbols on the other branch including non-DTX bits, symbol values of the DTX bits may be flexibly replaced. For example, if the four binary symbols are respectively "1, DTX, DTX, and DTX", the symbol value of the DTX bit corresponding to n_{H2} is replaced with a symbol value "1" of the non-DTX bit on the same branch, or directly replaced with "0" or "1" by default, or replaced in the value setting methods of the third embodiment and the fourth embodiment in combination, and the details are not described herein again. In addition, if the number of the DTX bits in nₖ, nₖ₊₁, nₖ₊₂, and nₖ₊₃ are equal to 4, the output from the modulation mapping on the two branches is equal to the real value 0.

According to this embodiment, when the binary symbols on one branch are all DTX bits, modulation mapping is performed on the binary symbols on the same branch, and a real value 0 is output. It can be known that when the input symbols on only one branch are all DTX bits, the transmission channel for this branch may be closed down alone, so that the system transmission power is lowered, and thus the system resources are saved y. In addition, using the DTX bits to replicate the non-DTX bits, the DTX bits are supplied to a receiving end as redundant information of the non-DTX bits, such that the performance for demodulating the non-DTX bits by the receiving end is improved.

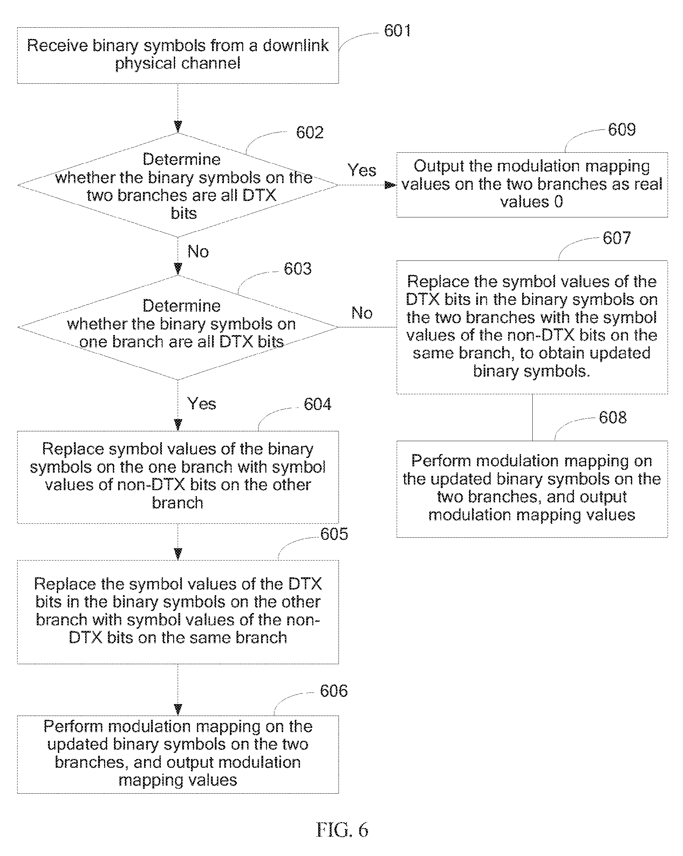

FIG. 6 is a flow chart of a sixth embodiment of a mapping method for DTX bits according to the present invention. In this embodiment, a modulation mapping process for binary symbols that are all DTX bits is exemplified.
Step 601: Receive binary symbols from a downlink physical channel.
Step 602: Determine whether the binary symbols on two branches are all DTX bits. If yes, step 609 is performed; otherwise, step 603 is performed.
Step 603 Determine whether the binary symbols on one branch are all DTX bits. If yes, step 604 is performed; otherwise, step 607 is performed.
Step 604: Replace symbol values of the binary symbols on the one branch with symbol values of non-DTX bits on the other branch.
   In step 604, if only one non-DTX bit exists in the binary symbols on the other branch, replace the symbol values of the binary symbols on the one branch with the symbol value of the non-DTX bit on the other branch; and if the binary symbols on the other branch are all non-DTX bits, sequentially replace the symbol values of the DTX bits in the binary symbols on the one branch that are all DTX bits with the symbol values of the non-DTX bits in the binary symbols on the other branch.
   Hereinafter, the value setting process in Step 604 is described with 16QAM as an example. It is assumed that four consecutive binary symbols are nₖ, nₖ₊₁, nₖ₊₂, and nₖ₊₃, in which nₖ and nₖ₊₂ are input as the binary symbols on one branch, the I branch, where i₁ = nₖ and i₂ = nₖ₊₂; and nₖ₊₁ and nₖ₋₃ are input as the binary symbols on the other branch, the Q branch, where q₁ = nₖ₊₁ and q₂ = nₖ₊₃. If the two binary symbols nₖ and nₖ₊₂ on the I branch are all DTX bits, and the two binary symbols on the Q branch are all non-DTX bits, when q₁ = 0 and q₂ = 1, i₁ = q₁=0 and i₂ = q₂ = 1, that is, nₖ = nₖ₊₁= 0 and nₖ₊₂ = nₖ₊₃ = 1. Other value setting methods may also be adopted, for example, a reversed manner, that is, i₁ = q₂ = 1 and i₂=q₁ =0.
Step 605: Replace the symbol values of the DTX bits in the binary symbols on the other branch with the symbol values of the non-DTX bits on the same branch, to obtain updated binary symbols on the other branch.
   In step 605, in addition to obtaining the updated binary symbols by using the above value setting method, the symbol values of the DTX bits in the binary symbols on one branch are further replaced with 0 or 1, to obtain the updated binary symbols; the symbol values of the DTX bits in the binary symbols on the same branch are replaced with symbol values of adjacent non-DTX bits, to obtain the updated binary symbols; or the symbol values of the DTX bits in the binary symbols on the same branch are replaced with a symbol value of a non-DTX bit having the lowest reliability, based on the reliability of each bit in the binary symbols, to obtain the updated binary symbols.
Step 606: Perform modulation mapping on the updated the binary symbols on the two branches, and output modulation mapping values. The current process ends.
Step 607: Replace the symbol values of fhe DTX bits in the binary symbols on the two branches with the symbol values of the non-DTX bits on the same branch, to obtain updated binary symbols.
Step 608: Perform modulation mapping on the updated binary symbols on the two branches, and output modulation mapping values. The current process ends.
Step 609: Output the modulation mapping values on the two branches as real values 0. The current process ends.

According to the embodiment, when the binary symbols on one branch are all DTX bits, the values of the binary symbols on one branch are replaced with the values of the non-DTX bits on the other branch, such that the DTX bits are supplied to a receiving end as redundant information of the non-DTX bits, thereby improving the performance for demodulating the non-DTX bits by the receiving end.

In the third to the sixth embodiments, the modulation mapping processes are all specifically described with 16QAM modulation mapping as an example. In practice, 64QAM modulation mapping or a higher order modulation mapping process is similar thereto, and the details thereof may not be described herein again.

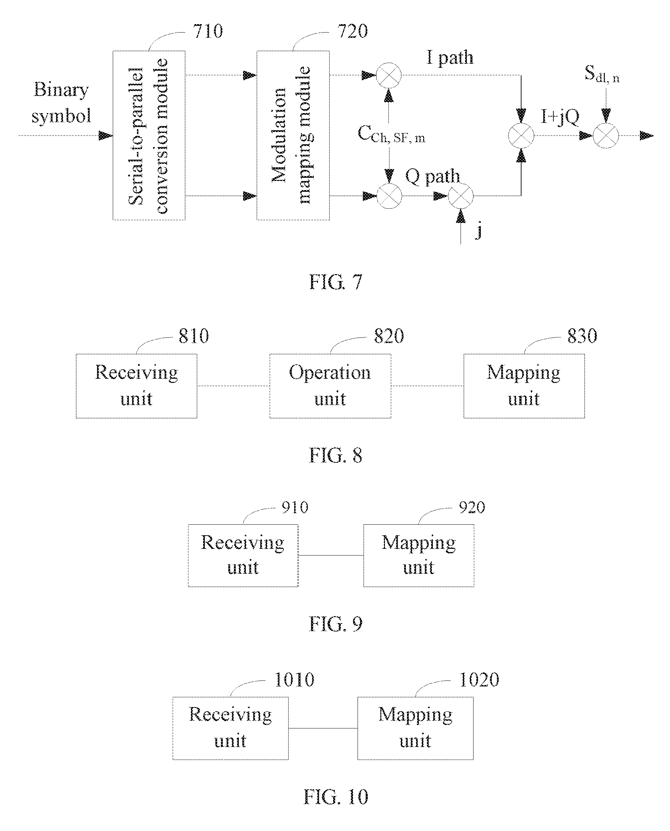

FIG. 7 is a schematic structural view of a device employing an embodiment of a mapping method for DTX bits according to the present invention. Binary symbols from a downlink physical channel are input into a serial-to-parallel conversion module 710, and the serial-to-parallel conversion module 710 converts serial binary symbols into corresponding parallel binary symbols, and the parallel binary symbols are split into binary symbols on two branches, that is, binary symbols on the I branch and binary symbols on the Q branch. The binary symbols on the two branches are respectively input into a modulation mapping module 720., and the modulation mapping module 720 replaces symbol values of DTX bits in the binary symbols on the two branches following any one of the above embodiments. Afterwards, a modulation mapping table is queried, and real values of binary symbols on the two branches are output. The real values on the two branches are spread with a spreading code C_{ch,SF,m}. The two branches I and Q are combined to generate I +- jQ, and I + jQ is scrambled with a scrambling code S_{dl,n} and then modulated to form a radio signal for transmission.

Hereinafter, description is made with 16QAM as an example. It is assumed that the input four binary symbols are nₖ, nₖ₊₁, nₖ₊₂, and nₖ₊₃, after passing through the serial-to-parallel conversion module 710, nₖ and nₖ₊₂ are input as the binary symbols on the I branch, that is, i₁= nₖ and i₂ =nₖ₊₂; and nₖ₊ᵢ and nₖ₊₂ are input as the binary symbols on the Q branch, that is, q₁= nₖ₊₁ and q₂= nₖ₊₃. After the binary symbols on the I branch and Q branch are input into the modulation mapping module 720, the modulation mapping module 720 replaces the symbol values of the DTX bits of the binary symbols on the two branches following any one of the above embodiments. Then, a previously saved modulation mapping table as shown in Table 1 below is queried, and real values on the two branches are output. The real values are subsequently spread and scrambled, to output a modulated transmission signal.

**Table 1**

| **i₁q₁i₂q₂** | **I branch** | **Q branch** |
|---|---|---|
| 0000 | 0.4472 | 0.4472 |
| 0001 | 0.4472 | 1.3416 |
| 0010 | 1.3416 | 0.4472 |
| 0011 | 1.3416 | 1.3416 |
| 0100 | 0.4472 | -0.4472 |
| 0101 | 0.4472 | -1.3416 |
| 0110 | 1.3416 | -0.4472 |
| 0111 | 1.3416 | -1.3416 |
| 1000 | -0.4472 | 0.4472 |
| 1001 | -0.4472 | 1.3416 |
| 1010 | -1.3416 | 0.4472 |
| 1011 | -1.3416 | 1.3416 |
| 1100 | -0.4472 | -0.4472 |
| 1101 | -0.4472 | -1.3416 |
| 1110 | -1.3416 | -0.4472 |
| 1111 | -1.3416 | -1.3416 |

In accordance with the processes of the embodiments of the modulation mapping methods for DTX bits, the present invention further provides embodiments of modulation mapping devices for DTX bits.

FIG. 8 is a block diagram of a first embodiment of a modulation mapping device for DTX bits according to the present invention. As shown in FIG. 8, the device includes a receiving unit 810, an operation unit 820, and a mapping unit 830.

The receiving unit 810 is configured to receive binary symbols from a downlink physical channel; the operation unit 820 is configured to replace symbol values of DTX bits in the binary symbols with symbol values of non-DTX bits, to obtain updated binary symbols; and the mapping unit 830 is configured to perform modulation mapping on the updated binary symbols.

Specifically, the operation unit 820 may include at least one of the following units (not shown in FIG. 8):
a first operation unit, configured to replace the symbol values of the DTX bits in the binary symbols with symbol values of adjacent non-DTX bits;
a second operation unit, configured to replace the symbol values of the DTX bits with symbol values of non-DTX bits having the lowest reliability, based on the reliability of each bit in the binary symbols;
a third operation unit, configured to replace the symbol values of the DTX bits in the binary symbols with symbol values ofnon-DTX bits on one branch as the DTX bits; and
a fourth operation unit, configured to replace the symbol values of the DTX bits in the binary symbols with symbol values of non-DTX bits on the other branch excluding the DTX bits.

In addition, the mapping unit 830 is further configured to, when the binary symbols on one branch are all DTX bits, perform modulation mapping on the binary symbols on the same branch , and output a real value 0; or replace symbol values of the binary symbols on one branch with symbol values of non-DTX bits in the binary symbols on the other branch, to obtain updated binary symbols, and then perform modulation mapping on the updated binary symbols.

FIG. 9 is a block diagram of a second embodiment of a modulation mapping device for DTX bits according to the present invention. As shown in FIG. 9, the device includes a receiving unit 910 and a mapping unit 920.

The receiving unit 910 is configured to receive binary symbols from a downlink physical channel; and the mapping unit 920 is configured to, when the binary symbols on one branch are all DTX bits, perform modulation mapping on the binary symbols on the same branch, and output a real value 0.

In addition, the device may further include at least one of the following units (not shown in FIG. 9):
a first operation unit, configured to replace symbol values of DTX bits in the binary symbols on one branch with symbol values ofnon-DTX bits when the binary symbols on the same branch include the non-DTX bits, to obtain updated binary symbols;
a second operation unit, configured to replace symbol values of DTX bits in the binary symbols on one branch with 0 or 1 when the binary symbols on the same branch include the non-DTX bits, to obtain updated binary symbols;
a third operation unit, configured to replace symbol values of DTX bits in the binary symbols on one branch with symbol values of adjacent non-DTX bits when the binary symbols on the same branch include the non-DTX bits, to obtain updated binary symbols; and
a fourth operation unit, configured to replace symbol values of DTX bits in the binary symbols on one branch with symbol values of non-DTX bits having the lowest symbol values based on the reliability of each bit in the binary symbols, when the binary symbols on the same branch include the non-DTX bits, to obtain updated binary symbols.

In addition, the mapping unit 920 is further configured to perform modulation mapping on the updated binary symbols.

Based on the description of the above embodiment, it can be known that in the embodiment of the present invention, after the binary symbols from the downlink physical channel are received, the symbol values of the DTX bits in the binary symbols are replaced with the symbol values of the non-DTX bits, to obtain the updated binary symbols, and modulation mapping is performed on the updated binary symbols. Using the DTX bits to replicate the non-DTX bits, the DTX bits are supplied to a receiving end as redundant information of the non-DTX bits, such that the performance for demodulating the non-DTX bits by the receiving end is improved. In addition, after the binary symbols from the downlink physical channel are received, when the binary symbols on one branch are all DTX bits, modulation mapping is performed on the binary symbols on the same branch, and a real value 0 is output. Therefore, it can be known that when the input symbols on only one branch are all DTX bits, transmission channel for the branch may be closed down alone, so that the system transmission power is lowered, and thus the system resources are saved.

FIG. 10 is a block diagram of a third embodiment of a modulation mapping device for DTX bits according to the present invention. As shown in FIG. 10, the device includes a receiving unit 1010 and a mapping unit 1020.

The receiving unit 1010 is configured to receive binary symbols from a downlink physical channel; and the mapping unit 1020 is configured to, when the binary symbols on two branches are all DTX bits, *perform modulation mapping on the binary symbols on the two branches , and output real values 0.

The mapping unit 1020 is further configured to replace symbol values of DTX bits in the binary symbols with symbol values of non-DTX bits in the binary symbols on the same branch when the binary symbols on the two branches both include DTX bits and non-DTX bits, to obtain updated binary symbols, and perform modulation mapping on the updated binary symbols.

The mapping unit 1020 is further configured to replace symbol values of DTX bits binary symbols on one branch with symbol values of non-DTX bits in the binary symbols on the other branch when the binary symbols on one branch of the two branches are all DTX bits and the binary symbols on the other branch includes the non-DTX bits, to obtain updated binary symbols, and perform modulation mapping on the updated binary symbols.

According to the embodiment, when the binary symbols on one branch are all DTX bits, the symbol values of the binary symbols on one branch may be replaced with the symbol values of the non-DTX bits in the binary symbols on the other branch, such that the DTX bits are supplied to a receiving end as redundant information of the non-DTX bits, thereby improving the performance for demodulating the non-DTX bits by the receiving end.

It is clear to persons skilled in the art that the present invention may be accomplished through software plus a necessary universal hardware platform. Based on such understandings, all or a part of the technical solutions under the present invention that make contributions to the prior art may be essentially embodied in the form of a software product. The software product may be stored in a storage medium, which can be a Read-Only Memory (ROM), a Random Access Memory (RAM), a magnetic disk, or a Compact Disk Read-Only Memory (CD-ROM). The software product includes a number of instructions that enable a computer device (personal computer, server, or network device) to execute the methods provided in the embodiments of the present invention.

The above embodiments are merely provided for elaborating the technical solutions of the present invention, but not intended to limit the present invention.

## Claims

1. A modulation mapping method for Discontinuous Transmission, DTX, bits, **characterized by**:
receiving (101) binary symbols from a downlink physical channel;
replacing (102) symbol values of DTX bits in the binary symbols with symbol values of non-DTX bits, to obtain updated binary symbols; and
performing (103) modulation mapping on the updated binary symbols.

2. The method according to claim 1, wherein the replacing (102) the symbol values of the DTX bits in the binary symbols with the symbol values of the non-DTX bits comprises:
replacing the symbol values of the DTX bits in the binary symbols with symbol values of adjacent non-DTX bits;
replacing the symbol values of the DTX bits in the binary symbols with symbol values of non-DTX bits on the same branch; or
replacing the symbol values of the DTX bits in the binary symbols on one branch with symbol values of non-DTX bits on the other branch.

3. The method according to claim 2, wherein the replacing the symbol values of the DTX bits in the binary symbols with the symbol values of the adjacent non-DTX bits comprises:
when bits forward adjacent to the DTX bits are non-DTX bits, replacing the symbol values of the DTX bits with a symbol value of a first non-DTX bit forward adjacent to the DTX bits and when the bits forward adjacent to the DTX bits are DTX bits, replacing the symbol values of the DTX bits with a symbol value of a first non-DTX bit backward adjacent to the DTX bits; or
when bits backward adjacent to the DTX bits are non-DTX bits, replacing the symbol values of the DTX bits with a symbol value of a first non-DTX bit backward adjacent to the DTX bits, and when the bits backward adjacent to the DTX bits are DTX bits, replacing the symbol values of the DTX bits with a first non-DTX bit forward adjacent to the DTX bits.

4. The method according to claim 2, further comprising: when the binary symbols on the same branch are all DTX bits, performing modulation mapping on the binary symbols on the same branch , and outputting a real value 0 (504).

5. The method according to claim 1, the replacing (102) the symbol values of the DTX bits in the binary symbols with the symbol values of the non-DTX bits comprises: when the binary symbols on one branch are all DTX bits, and the binary symbols on the other branch comprise non-DTX bits, replacing symbol values of the DTX bits in the binary symbols on the one branch with symbol values of the non-DTX bits in the binary symbols on the other branch, to obtain 1 updated binary symbols.

6. The method according to claim 5, further comprising:
when the binary symbols on the other branch containing the non-DTX bits comprise DTX bits, replacing symbol values of DTX bits in the binary symbols on the other branch with symbol values of the non-DTX bits on the same branch, to obtain updated binary symbols; and
performing modulation mapping on the updated binary symbols.

7. A modulation mapping device for Discontinuous Transmission, DTX, bits, **characterized by**:
a receiving unit (810), configured to receive binary symbols from a downlink physical channel;
an operation unit (820), configured to replace symbol values of DTX bits in the binary symbols with symbol values of non-DTX bits, to obtain updated binary symbols; and
a mapping unit (830), configured to perform modulation mapping on the updated binary symbols.

8. The device according to claim 7, wherein the operation unit (820) comprises at least one of the following units:
a first operation unit, configured to replace the symbol values of the DTX bits in the binary symbols with symbol values of adjacent non-DTX bits;
a third operation unit, configured to replace the symbol values of the DTX bits in the binary symbols with symbol values of non-DTX bits on the same branch; and
a fourth operation unit, configured to replace the symbol values of the DTX bits in the binary symbols on one branch with symbol values of non-DTX bits in the binary symbols on the other branch.

9. The device according to claim 8, wherein the mapping unit (830) is further configured to, when the binary symbols on one branch are all DTX bits, perform modulation mapping on the binary symbols on the same branch , and output a real value 0.

## Patentansprüche

1. Modulationszuordnungsverfahren für diskontinuierliche Übertragungs-(Discontinuous Transmission), DTX, Bits, **gekennzeichnet durch**:
Empfangen (101) binärer Symbole von einem physischen Abwärtsstreckenkanal;
Ersetzen (102) von Symbolwerten von DTX-Bits in den binären Symbolen **durch** Symbolwerte von Nicht-DTX-Bits, um aktualisierte binäre Symbole zu erhalten; und
Durchführen (103) einer Modulationszuordnung an den aktualisierten binären Symbolen.

2. Verfahren nach Anspruch 1, wobei das Ersetzen (102) der Symbolwerte der DTX-Bits in den binären Symbolen durch die Symbolwerte der Nicht-DTX-Bits aufweist:
Ersetzen der Symbolwerte der DTX-Bits in den binären Symbolen durch Symbolwerte angrenzender Nicht-DTX-Bits;
Ersetzen der Symbolwerte der DTX-Bits in den binären Symbolen durch Symbolwerte von Nicht-DTX-Bits auf derselben Abzweigung; oder
Ersetzen der Symbolwerte der DTX-Bits in den binären Symbolen auf einer Abzweigung durch Symbolwerte von Nicht-DTX-Bits auf der anderen Abzweigung.

3. Verfahren nach Anspruch 2, wobei das Ersetzen der Symbolwerte der DTX-Bits in den binären Symbolen durch die Symbolwerte der angrenzenden Nicht-DTX-Bits aufweist:
wenn Bits, die in Vorwärtsrichtung an die DTX-Bits angrenzen, Nicht-DTX-Bits sind, Ersetzen der Symbolwerte der DTX-Bits durch einen Symbolwert eines ersten Nicht-DTX-Bits, das in Vorwärtsrichtung an die DTX-Bits angrenzt, und wenn die Bits, die in Vorwärtsrichtung an die DTX-Bits angrenzen, DTX-Bits sind, Ersetzen der Symbolwerte der DTX-Bits durch einen Symbolwert eines ersten Nicht-DTX-Bits, das in Rückwärtsrichtung an die DTX-Bits angrenzt; oder
wenn Bits, die in Rückwärtsrichtung an die DTX-Bits angrenzen, Nicht-DTX-Bits sind, Ersetzen der Symbolwerte der DTX-Bits durch einen Symbolwert eines ersten Nicht-DTX-Bits, das in Rückwärtsrichtung an die DTX-Bits angrenzt, und wenn die Bits, die in Rückwärtsrichtung an die DTX-Bits angrenzen, DTX-Bits sind, Ersetzen der Symbolwerte der DTX-Bits durch ein erstes Nicht-DTX-Bit, das in Vorwärtsrichtung an die DTX-Bits angrenzt.

4. Verfahren nach Anspruch 2, des Weiteren aufweisend: wenn die binären Symbole auf derselben Abzweigung alle DTX-Bits sind, Durchführen einer Modulationszuordnung an den binären Symbolen auf derselben Abzweigung und Ausgeben eines realen Werts 0 (504).

5. Verfahren nach Anspruch 1, wobei das Ersetzen (102) der Symbolwerte der DTX-Bits in den binären Symbolen durch die Symbolwerte der Nicht-DTX-Bits aufweist:
wenn die binären Symbole auf einer Abzweigung alle DTX-Bits sind und die binären Symbole auf der anderen Abzweigung Nicht-DTX-Bits aufweisen, Ersetzen von Symbolwerten der DTX-Bits in den binären Symbolen auf der einen Abzweigung durch Symbolwerte der Nicht-DTX-Bits in den binären Symbolen auf der anderen Abzweigung, um aktualisierte binäre Symbole zu erhalten.

6. Verfahren nach Anspruch 5, des Weiteren aufweisend:
wenn die binären Symbole auf der anderen Abzweigung, welche die Nicht-DTX-Bits enthalten, DTX-Bits aufweisen, Ersetzen von Symbolwerten von DTX-Bits in den binären Symbolen auf der anderen Abzweigung durch Symbolwerte der Nicht-DTX-Bits auf derselben Abzweigung, um aktualisierte binäre Symbole zu erhalten; und
Durchführen einer Modulationszuordnung an den aktualisierten binären Symbolen.

7. Modulationszuordnungsvorrichtung für diskontinuierliche Übertragungs-(Discontinuous Transmission), DTX, Bits, **gekennzeichnet durch**:
eine Empfangseinheit (810), die zum Empfangen binärer Symbole von einem physischen Abwärtsstreckenkanal konfiguriert ist;
eine Bearbeitungseinheit (820), die zum Ersetzen von Symbolwerten von DTX-Bits in den binären Symbolen **durch** Symbolwerte von Nicht-DTX-Bits konfiguriert ist, um aktualisierte binäre Symbole zu erhalten; und
eine Zuordnungseinheit (830), die zum Durchführen einer Modulationszuordnung an den aktualisierten binären Symbolen konfiguriert ist.

8. Vorrichtung nach Anspruch 7, wobei die Bearbeitungseinheit (820) zumindest eine der folgenden Einheiten aufweist:
eine erste Bearbeitungseinheit, die zum Ersetzen der Symbolwerte der DTX-Bits in den binären Symbolen durch Symbolwerte angrenzender Nicht-DTX-Bits konfiguriert ist;
eine dritte Bearbeitungseinheit, die zum Ersetzen der Symbolwerte der DTX-Bits in den binären Symbolen durch Symbolwerte von Nicht-DTX-Bits auf derselben Abzweigung konfiguriert ist; und
eine vierte Bearbeitungseinheit, die zum Ersetzen der Symbolwerte der DTX-Bits in den binären Symbolen auf einer Abzweigung durch Symbolwerte von Nicht-DTX-Bits in den binären Symbolen auf der anderen Abzweigung konfiguriert ist.

9. Vorrichtung nach Anspruch 8, wobei die Zuordnungseinheit (830) ferner konfiguriert ist, wenn die binären Symbole auf einer Abzweigung alle DTX-Bits sind, eine Modulationszuordnung an den binären Symbolen auf derselben Abzweigung durchzuführen und einen realen Wert 0 auszugeben.

## Revendications

1. Procédé de mappage de modulation pour des bits de transmission discontinue, DTX, **caractérisé par** les étapes suivantes :
recevoir (101) des symboles binaires à partir d'un canal physique de liaison descendante ;
remplacer (102) des valeurs de symbole de bits DTX dans les symboles binaires par des valeurs de symbole de bits non DTX, pour obtenir des symboles binaires mis à jour ; et
exécuter (103) un mappage de modulation sur les symboles binaires mis à jour.

2. Procédé selon la revendication 1, dans lequel l'étape consistant à remplacer (102) les valeurs de symbole des bits DTX dans les symboles binaires par les valeurs de symbole des bits non DTX comprend :
remplacer les valeurs de symbole des bits DTX dans les symboles binaires par des valeurs de symbole de bits non DTX adjacents ;
remplacer les valeurs de symbole des bits DTX dans les symboles binaires par des valeurs de symbole de bits non DTX sur la même branche ; ou
remplacer les valeurs de symbole des bits DTX dans les symboles binaires sur une branche par des valeurs de symbole de bits non DTX sur l'autre branche.

3. Procédé selon la revendication 2, dans lequel l'étape consistant à remplacer les valeurs de symbole des bits DTX dans les symboles binaires par les valeurs de symbole des bits non DTX adjacents comprend :
lorsque des bits situés en avant adjacents aux bits DTX sont des bits non DTX, remplacer les valeurs de symbole des bits DTX par une valeur de symbole d'un premier bit non DTX situé en avant adjacent aux bits DTX et lorsque les bits situés en avant adjacents aux bits DTX sont des bits DTX, remplacer les valeurs de symbole des bits DTX par une valeur de symbole d'un premier bit non DTX situé en arrière adjacent aux bits DTX ; ou
lorsque des bits situés en arrière adjacents aux bits DTX sont des bits non DTX, remplacer les valeurs de symbole des bits DTX par une valeur de symbole d'un premier bit non DTX situé en arrière adjacent aux bits DTX, et lorsque les bits situés en arrière adjacents aux bits DTX sont des bits DTX, remplacer les valeurs de symbole des bits DTX par un premier bit non DTX situé en avant adjacent aux bits DTX.

4. Procédé selon la revendication 2, comprenant en outre : lorsque les symboles binaires sur la même branche sont tous des bits DTX, exécuter un mappage de modulation sur les symboles binaires sur la même branche, et fournir une valeur réelle 0 (504).

5. Procédé selon la revendication 1, dans lequel l'étape consistant à remplacer (102) les valeurs de symbole des bits DTX dans les symboles binaires par les valeurs de symbole des bits non DTX comprend : lorsque les symboles binaires sur une branche sont tous des bits DTX, et que les symboles binaires sur l'autre branche comportent des bits non DTX, remplacer des valeurs de symbole des bits DTX dans les symboles binaires sur la branche par des valeurs de symbole des bits non DTX dans les symboles binaires sur l'autre branche, pour obtenir des symboles binaires mis à jour.

6. Procédé selon la revendication 5, comprenant en outre :
lorsque les symboles binaires sur l'autre branche contenant les bits non DTX comprennent des bits DTX, remplacer des valeurs de symbole de bits DTX dans les symboles binaires sur l'autre branche par des valeurs de symbole des bits non DTX sur la même branche, pour obtenir des symboles binaires mis à jour ; et
exécuter un mappage de modulation sur les symboles binaires mis à jour.

7. Dispositif de mappage de modulation pour des bits de transmission discontinue, DTX, **caractérisé par** :
une unité de réception (810), configurée pour recevoir des symboles binaires à partir d'un canal physique de liaison descendante ;
une unité d'opération (820), configurée pour remplacer des valeurs de symbole de bits DTX dans les symboles binaires par des valeurs de symbole de bits non DTX, pour obtenir des symboles binaires mis à jour ; et
une unité de mappage (830), configurée pour exécuter un mappage de modulation sur les symboles binaires mis à jour.

8. Dispositif selon la revendication 7, dans lequel l'unité d'opération (820) comprend au moins une des unités suivantes :
une première unité d'opération, configurée pour remplacer les valeurs de symbole des bits DTX dans les symboles binaires par des valeurs de symbole de bits non DTX adjacents ;
une troisième unité d'opération, configurée pour remplacer les valeurs de symbole des bits DTX dans les symboles binaires par des valeurs de symbole de bits non DTX sur la même branche ; et
une quatrième unité d'opération, configurée pour remplacer les valeurs de symbole des bits DTX dans les symboles binaires sur une branche par des valeurs de symbole de bits non DTX dans les symboles binaires sur l'autre branche.

9. Dispositif selon la revendication 8, dans lequel l'unité de mappage (830) est configurée en outre pour exécuter, lorsque les symboles binaires sur une branche sont tous des bits DTX, un mappage de modulation sur les symboles binaires sur la même branche, et fournir une valeur réelle 0.
